Europäisches Patentamt

European Patent Office

Office européen des brevets

(19)

(11) Publication number: **0 173 652**
A2

(12) # EUROPEAN PATENT APPLICATION

(21) Application number: 85830179.9

(51) Int. Cl.⁴: **B 23 D 63/16**

(22) Date of filing: 09.07.85

(30) Priority: 12.07.84 IT 352484

(71) Applicant: **PRECISION TOOLING s.r.l., Via Pervilli, 2, I-42100 Reggio Emilia (IT)**

(43) Date of publication of application: 05.03.86
Bulletin 86/10

(72) Inventor: **Lusetti, Giorgio, Via Matteotti 4, I-42011 Bagnolo in Piano (RE) (IT)**

(74) Representative: **Rinaldi, Carlo, c.o. Studio Brevetti Nazionali ed Esteri dell'Ing. Carlo Rinaldi & C. s.d.f. Piazza di Porta Castiglione, 16, I-40136 Bologna (IT)**

(84) Designated Contracting States: **AT BE CH DE FR GB LI LU NL SE**

(54) **Device for grinding chain saw teeth.**

(57) A device is disclosed able to grind chain saw tooths with a supporting structure for a casing which houses an electric motor whose shaft is splined on the axis of rotation of a disk grinding wheel. The device is characterised in that the structure is suitable to be fixed on a saw blade of a chain saw, in that said casing brings the grinding wheel in contact with tooths of a chain and which comprises a stopping means to prevent the translations of each tooth under the action of the disk grinding wheel.

1

# DEVICE FOR GRINDING CHAIN SAW TOOTHS

The invention relates to a device for grinding, according with the suitable angles and dephts, the tooths of a chain saw, which, as known, are sequence-disposed on a chain which winds a bearing saw blade, able to permit the rotation of the chain under the motoring over effect of an internal combustion engine.

In chain saws, the tooths allows to cut wooden materials by removing shavings with defined thiknesses; for a good functioning of the chain saw it's necessary that all the tooths are well grinded according with predetermined angles and dephts; with use, the grinding runs low so it has to be reset to avoid a bad functioning of the chain saw and a further damaging of the tooths consuming a considerable quantity of energy.

To reset the tooths grinding, grinder are used which are mounted on a workbench,therefore, they are heavy and bulky; they operate on a chain removed from the chain saw and have the disadvantage of not to be portable.

Portable device are also known, like saw files or candle grinding wheels which grind the tooths. The first ones are used in an empiric way so the operator has to be very expert and the operation requires many time.
The second ones are subjected to wear because of their particular geometry, therefore, each grinding wheel can be used only for a small number of chains.

The invention as claimed is intended to remedy these drawbacks. It solves the problem of how to create a device for grinding chain saw tooths or similar cutting machines. By using such a device the following advantages are achieved: the grinding of the tooths is made by a disk grinding wheel, whose average life is longer than that of candle grinding wheels; the angle and depht precision is guaranteed for a numberous series of chains to grind.

The advantages offered by the invention are mainly that the use of a disk grinding wheel allows, in addition to the already said uniformity in work during time, a very easy use; such a device is portable, appliable to the not-removed chain of a chain saw; it can be used wherever it is present an energy source for a motor which rotates the grinding wheel.
All in all, the device is extremely durable.

One way of carrying out the invention is described in detail below with reference to drawings which illustrate only one specific embodiment, in which:
Fig. 1 represents a side view of a device in accordance with the invention, disposed on a mounted chain saw;
Figs. 2 - 3 represent the device seen from the top;

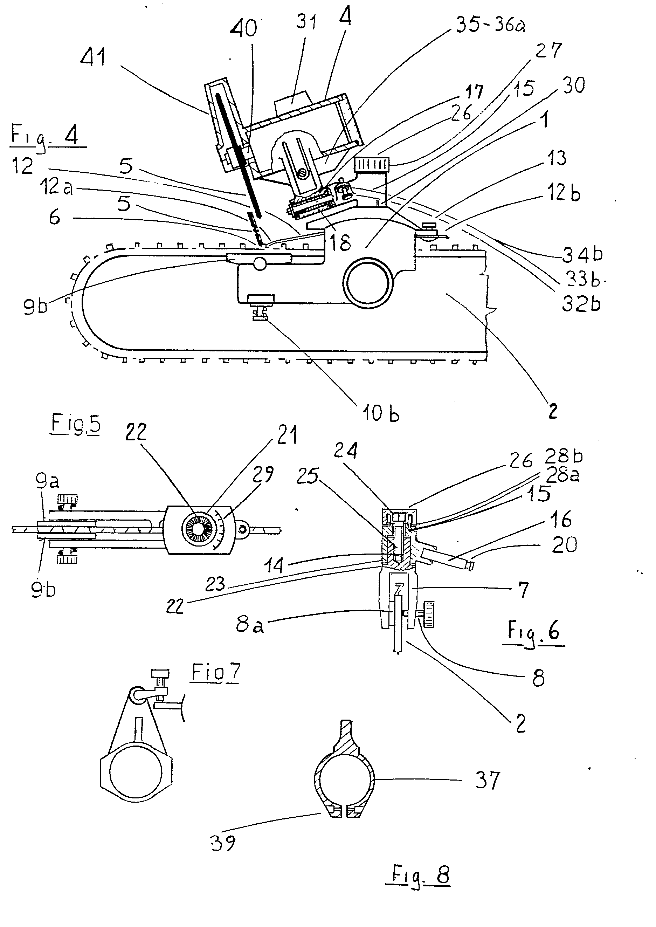

Fig. 4 represents the same device where a grinding wheel is shown is a first steady position and in a second working position;
Figs. 5-6-7-8 represent consturctive particulars of the device in accordance with the invention.

The figures show a device for grinding chain saw tooths comprising a structure 1 suitable to be fixed on a saw blade 2 of a chain saw 3; said structure 1 comprising a supporting element for a casing 4 able to house an electric motor with a shaft splined on an axis of rotation of a disk grinding wheel 5 suitable to go in contact with a tooth 6 of a chain of·said chain saw 3 to reset the correct cutting angle. The structure 1 is suitable to be disposed astride said saw blade 2, comprising, as it can be noted in Fig. 6, a jaw 7 fitted with an engaging screw 8 for said saw blade 2; said screw 8 permitting to structure 1 to remain fixed relative to the saw blade 2 cooperating with abutment structures 8a.

The structure 1 supports a first and a second flexible sheet elastic clamps 9a and 9b, fitted with, respectively, a first and a second adjusting screw 10a and 10b of the elastic preload of said clamps 9a and 9b to constrain the tooth 6 relative to the structure 1 to avoid the consequences of the transversal stresses given by the grinding wheel 5.

A third and a fourth positioning screw define the position of the sheet 9 relative to structure 1.

A metallic sheet bar 12 defines, rightwards, the position of each tooth 6; said bar has a first bent left end 12a to avoid the rightwards translation of the tooth 6 and to favour the positioning of a subsequent tooth, which, by sliding, allows the rising of said end 12a.

On a second end 12b, said bar 12 is fitted with a slot on which engages a fixing and adjusting screw 13 of the position of said bar 12.

Said structure 1 supports a pin 14 (Fig. 6) able to permit the rotation of a bush 15 integral with a pin 16 suitable to be inserted in a bushing 17 inside of which a torsion spring 18 is arranged able to oppose the relative rotation of the bushing 17 with respect to the pin 16. An elastic ring is inserted in a groove 20 of said pin 16 to prevent the translation of the said pin inside the bushing 17.

At the base of said pin 14, on structure 1, there is an annular surface 21 which has a splined zone 22 with radial splines relative to the centre of said surface 21; the splines of the zone 22 cooperate with similar splines made in a front surface 23 of said bush 15 to prevent not required rotations when using the device and to arrange at a suitable angle the bushing 17 relative to pin 14.

In order to prevent, during use, the rotation of the bush 15 relative to pin 14, a fixing screw is inserted in an axial hole 25 made in said pin 14.

Said screw 24 supports a knob 26 with a knurled side surface 27 which, opportunely thighten, gives to bushing 17 a force necessary and sufficient to prevent the rotations between said splines.

The thrust of the screw 24 is given to bushing 17 by the pressure contact of two surfaces 28a and 28b, respectively, belonging to bush 15 and knob 26.

For a visual positioning of bush 15 relative to pin 14, the structure 1 has a reference graduated zone 29 and the bush 15 has a vertical nick 30 allowing the angular positioning of bush 15 relative to pin 14 to obtain a subsequent correct functioning of the device.

The casing 4 is rotated around pin 16 by insisting on a handle 31 situated as protuberance of the same casing 4 in its upper part against the action of a return spring 18.

To limitate the angular movements, both rightwards and leftwards, of casing 4 relative to pin 16, two limit stop screws 32a and 32b, respectively, right and left, are provided inserted in respective holes 33a and 33b made in, respectively, two lugs 34a and 34b of the structure 1 for engaging pin 16. The ends of said screws 32a and 32b cooperate with a rib 35 disposed on a symmetry plane in said casing 4 and suitable to abut with a face 36a on screw 32a to define the maximum leftwards angular excursion of casing 4 and with a face 36b on screw 32b to define the maximum rightwards angular excursion of casing 4.

The casing 4 houses an electric motor, not shown, which is correctly and steadily positioned inside said casing 4 by known means, not shown, and by an elastic ring 37 made in the body of said casing 4 and suitable to be closed by a closing screw 38 housed in a hole 39.

Said motor has a shaft 40 on which the disk grinding wheel 5 is splined,in known way and means not shown; said disk grinding wheel 5 is sheltered, in its upper part, by a sump 41 to prevent damages, due to sparks, to the operator.

The functioning of the device can be explained as follows: it is known that chains have an alternance  of tooths 6, respectively, rights and lefts; therefore the grinding is made, for example, first on the left tooths then on the right ones.

We are going to explain, naturally, only the operation relative to the left tooths, meaning that a simple and opportune rotation of bush 15, referred to the graduated zone 29, allows the subsequent grinding operation on the right tooths.

The first operation to do is the fitting up of the device on the saw blade 2, fitting up which doesn't  require the removal of the chain from the chain saw 3; to do that, it is necessary to opportunely position the device so that the clamps 9a and 9b are in a position such as to cover the same chain to elastically engage it under the action of the two screws 10a and 10b.
The sctructural element allowing the steady positioning of structure 1 relative to the saw blade 2, is the
screw 8.

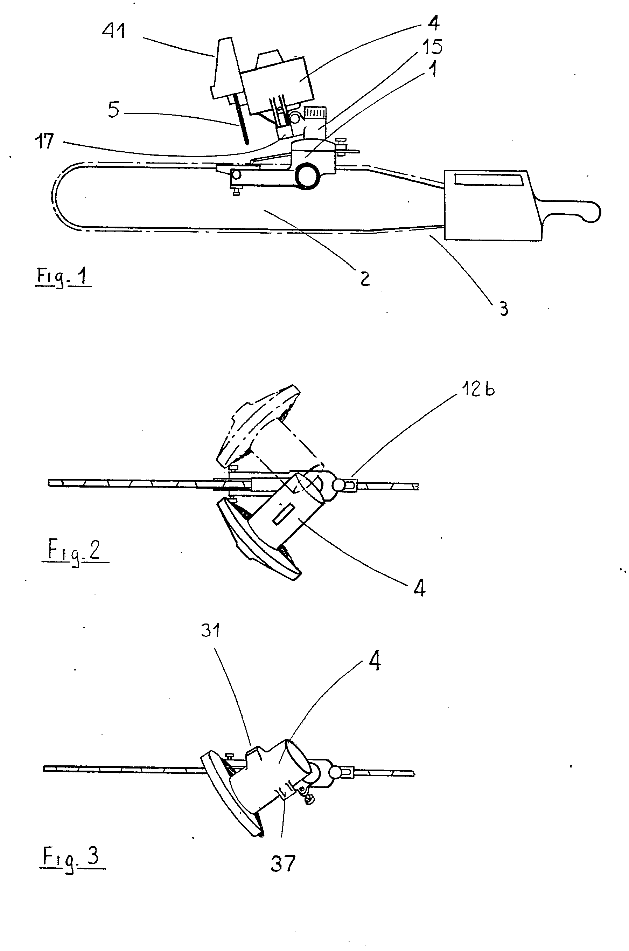

Once the shorter tooth, among those present, has been
choosen, the bar 12 is disposed, after having manoeuve-
red on screw 13, in such a way that the end 12a of the
same bar defines the working position for each tooth.
At this point the motor is runned and, in consequence,
the grinding wheel 5 is runned too; with a manual thrust
on the handle 31 the casing 4 is putted downwards  in
such a way that the grinding wheel 5 disposes in the
position shown in Fig. 3, that is in contact with the
cutting contour of the tooths.

Once the operation on a tooth has been finished, the
chain is dragged towards the arrow direction in such
a way that the bar 12 allows, for elasticity, the passing of the same tooth; then the second subsequent
tooth, which is left too, is positioned and the above
operation is done again.

The invention can be subjected to modifications not
affeting its essence. Particularly, the structure 1
can be constitued by an essentially closed tubular
shaped bearing zone able to wholly house said saw blade 2 and fitted with previously mentioned engaging
means for the same saw blade.
Furthermore, the bushing 17 can be fitted with a milling,parallel to its own symmetry axis,to precision
house an U-shaped structure whose bent ends are turned towards said pin 16;   two pins are fixed on this latter able to engage the bent ends of the spring 18; two pins delimiting the position of structure 1.

During use, when the bush is rotated clockwise, an end of said U-shaped structure drags the end of said spring on which it engages letting the other end of the spring to remain fixed to the opposite pin; in such a way counteracting efforts of the spring are obtained, which are symmetrical in the two rotation directions.

CLAIMS

1- Device for grinding chain saw tooths comprising at least a supporting structure for a casing able to house an electric motor with a shaft splined on an axis of rotation of a disk grinding wheel characterised in that said structure is suitable to be fixed on a saw blade of a chain saw; that said casing is able to bring in contact said grinding wheel with tooths of a chain of the chain saw, to reset the correct cutting angle under a manual action and against the action of a return spring; that it comprises a stopping means able to prevent the translations of each tooth under the action of the grinding wheel.

2- Device as claimed in claim 1, wherein said structure comprises a jaw fitted with an engaging screw for the saw blade and a first and a second elastic clamp to constrain a tooth under operation.

3- Device as claimed in claim 1, wherein said structure comprises an essentially closed tubular shaped bearing zone fitted with engaging means for said saw blade and a first and a second elastic clamp to constrain a tooth under operation.

4- Device as claimed in claim 1, wherein said casing is supported by said supporting structure by means of a pin suitable to be fixed in a predetermined position 5- Device as claimed in claim 1, wherein said casing is fitted with a handle for the manual action on it to bring the disk grinding wheel in contact with the tooth to grind against the action of a return spring; stopping means being present to prevent the operation of the grinding wheel on other structures instead of on tooth.

6- Device as claimed in claim 1, wherein said return spring is arranged between two pins situated on a pin around of which said casing rotates; an U-shaped structure being able to drag the first or the second end of said spring under the action of said manual force; said U-shaped structure being disposed in a milling made in a bush in which said pin is inserted.

0173652

1/2

Fig. 1

41
4
15
1
5
17
2
3

Fig. 2

12b
4

Fig. 3

31
4
37

0173652

2/2

Fig. 4

Fig. 5

Fig. 7

Fig. 6

Fig. 8